Europäisches Patentamt

European Patent Office

Office européen des brevets

(11) Veröffentlichungsnummer : **0 050 785**
**B1**

(12) **EUROPÄISCHE PATENTSCHRIFT**

(45) Veröffentlichungstag der Patentschrift :
**30.01.85**

(51) Int. Cl.⁴ : **F 16 H 57/06, G 05 G 5/06**

(21) Anmeldenummer : **81108220.5**

(22) Anmeldetag : **12.10.81**

(54) **Parkblockiereinrichtung für ein Getriebe.**

(30) Priorität : **27.10.80 US 200862**

(43) Veröffentlichungstag der Anmeldung :
**05.05.82 Patentblatt 82/18**

(45) Bekanntmachung des Hinweises auf die Patenterteilung : **30.01.85 Patentblatt 85/05**

(84) Benannte Vertragsstaaten :
**DE FR GB**

(56) Entgegenhaltungen :
**CH-A- 479 417**
**DE-A- 2 530 358**
**FR-A- 1 344 389**
**FR-A- 2 360 436**
**US-A- 1 506 091**

(73) Patentinhaber : **DEERE & COMPANY**
**1 John Deere Road**
**Moline Illinois 61265 (US)**

(72) Erfinder : **Troemner, James Oliver**
**504 W. 22 St.**
**Cedar Falls Iowa 50613 (US)**
Erfinder : **Wetrich, Peter Donald**
**2427 Terrace Dr.**
**Cedar Falls Iowa 50613 (US)**
Erfinder : **Volz, William Arthur**
**25221 Saratoga**
**Waterloo Iowa 50702 (US)**

(74) Vertreter : **Lins, Edgar, Dipl.-Phys. et al**
**Patentanwälte Gramm + Lins Theo-**
**dor-Heuss-Strasse 2**
**D-3300 Braunschweig (DE)**

**Beschreibung**

Die Erfindung betrifft eine Parkblockiereinrichtung für ein Getriebe, insbesondere ein Fahrzeuggetriebe, das über einen Gang- und einen Geschwindigkeitsschalthebel betätigt wird, wobei der Gangschalthebel zwischen mehreren, u. a. eine Parkstellung umfassenden Schaltstellungen und der Geschwindigkeitsschalthebel zwischen mehreren, u. a. eine Langsamfahrstufe umfassenden Geschwindigkeitsstufen verstellbar sind.

Normalerweise haben landwirtschaftliche und Industriefahrzeuge, vor allem solche, die bestimmte Schaltgetriebe mit einer Parkblockiereinrichtung aufweisen, keine Möglichkeit, die Parkblockiereinrichtung einzulegen, wenn die Blockierkeilnuten nicht miteinander fluchten. Ferner ist bei diesen Fahrzeugen nicht erkennbar, ob sich der Schalthebel in seiner Parkstellung befindet. Bei vielen landwirtschaftlichen Traktoren ist ferner nachteilig, daß die Parkstellung nicht die niedrigste Fahrstufengeschwindigkeit voraussetzt. Ist aber nicht die niedrigst mögliche Fahrstufe eingestellt, so werden auf das Getriebe hohe Kräfte ausgeübt.

Der Erfindung liegt die Aufgabe zugrunde, die eingangs erläuterte Parkblockiereinrichtung so zu verbessern, daß nur noch geringe Kräfte auf das Getriebe ausgeübt werden, wobei die Parkhebelstellung optisch erkennbar ist.

Diese Aufgabe wird gemäß der Erfindung durch folgende Merkmale gelöst :

a) Eine Blockierhalterung arretiert den Gangschalthebel ausrückbar in der genannten Parkstellung ;

b) eine Sperre ist relativ gegenüber dem Getriebe zwischen einer ersten und zweiten Stellung verstellbar, wobei die Sperre in ihrer ersten Stellung die Verschiebung des Gangschalthebels in seine Parkstellung verhindert, in ihrer zweiten Stellung aber zuläßt ;

c) der Geschwindigkeitsschalthebel verstellt bei seiner Verschiebung in die genannte Langsamfahrstufe die Sperre in ihre genannte zweite Stellung ;

d) die Sperre wird von einer Feder o. dergl. in ihre erste Stellung gedrückt bzw. gezogen.

Dabei ist es vorteilhaft, wenn die Blockierhalterung ein gestellfestes hakenförmiges Teil, das quer in den normalen Schaltweg des Gangschalthebels ragt, sowie ein Gelenk aufweist, durch das ein Teil des Gangschalthebels aus dem normalen Schaltweg herausgedrückt und um das hakenförmige Teil herum in dieses hineingeführt werden kann.

Dabei kann das genannte Gelenk eine Federspeicherdose aufweisen, die zwischen einem oberen Teil und einem unteren Teil des Gangschalthebels eingebaut ist. Diese Federspeicherdose kann eine Schraubenfeder umschließen, die das obere Teil des Gangschalthebels in eine bestimmte Stellung zum unteren Hebelteil drückt und es in dieser Stellung normalerweise hält. Hierbei kann nun der obere Teil des Gangschalthebels unabhängig von einer Bewegung seines unteren Teils in abgewinkelter Stellung verschwenkbar sein. Dabei ist es besonders vorteilhaft, wenn das Gelenk eine Auslenkung des oberen Teils des Gangschalthebels auch dann zuläßt, wenn zusammengehörende Zahnräder des Getriebes nicht voll im Eingriff miteinander stehen.

Ein Vorteil der neuen Parkblockiereinrichtung ist somit darin zu sehen, daß die Parkblockierung auch dann eingelegt werden kann, wenn die hierfür vorgesehenen Blockierkeilnuten, Zahnräder o. dergl. in dem Getriebe nicht genau miteinander fluchten und somit nicht in Eingriff miteinander gebracht werden können. Vorteilhaft ist ferner, daß der Fahrer des Fahrzeugs optisch erkennen kann, ob die Parkblockiereinrichtung eingeschaltet ist. Daher eignet sich die neue Konstruktion insbesondere für landwirtschaftliche Traktoren. Vorteilhaft ist schließlich auch, daß die neue Einrichtung geringere Kräfte auf das Getriebe ausübt, da die Parkblockierung nur dann eingeschaltet werden kann, wenn zuvor die niedrigste Fahrstufe gewählt wurde. Hierdurch wird auch die Sicherheit bei der Handhabung des Fahrzeuges erhöht.

Das Prinzip der erfindungsgemäßen Lösung läßt sich aber auch anwenden bei einer Parkblockiereinrichtung für ein Mehrganggetriebe mit mehreren Zahnrädern, die von einem Handschalthebel beaufschlagt werden, der zwischen mehreren, u. a. eine Parkstellung umfassenden Schaltstellungen verstellbar ist, wobei in Parkstellung Zahnräder in Eingriff miteinander gebracht werden. Erfindungsgemäß können dann folgende Merkmale vorgesehen werden :

a) Ein Federgelenk verbindet ein oberes Teil des Handschalthebels mit einem unteren Teil derart, daß das obere Teil in eine bestimmte Stellung zum unteren Hebelteil gedrückt und in dieser Stellung normalerweise gehalten wird, daß aber das obere Teil aus dieser bestimmten Stellung relativ gegenüber dem unteren Hebelteil herausgedrückt werden kann ;

b) eine Blockierhalterung arretiert den oberen Teil des Handschalthebels ausrückbar in der genannten Parkstellung und zwar auch dann, wenn die Zahnräder, die in dieser Parkstellung miteinander in Eingriff stehen sollen, noch nicht miteinander kämmen.

Weitere Merkmale der Erfindung sind Gegenstand der Unteransprüche und werden anhand eines Ausführungsbeispieles näher erläutert.

In der Zeichnung ist eine als Beispiel dienende Ausführungsform der Erfindung dargestellt. Es zeigen :

Figur 1 eine Parkblockiereinrichtung in isometrischer Darstellung ;

Figur 2 die Darstellung gemäß Figur 1 mit einem Längsschnitt durch den Gangschalthebel ;

Figur 3 in vergrößertem Maßstab einen Schnitt gemäß der Linie 3-3 in Figur 2 und

Figur 4 einen Teil der Parkblockiereinrichtung in Draufsicht jedoch mit abgenommener Abdeckplatte.

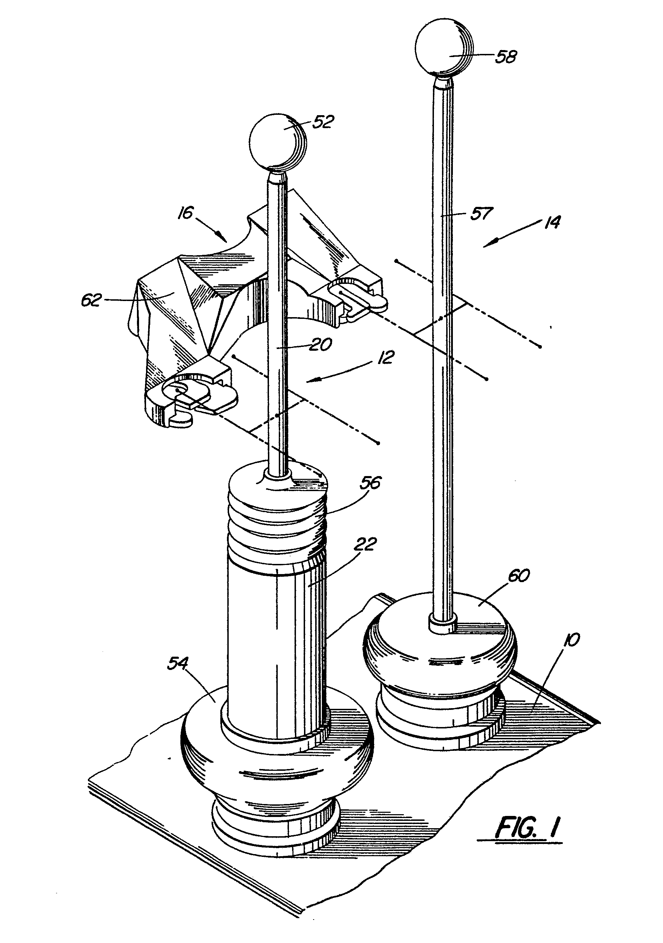

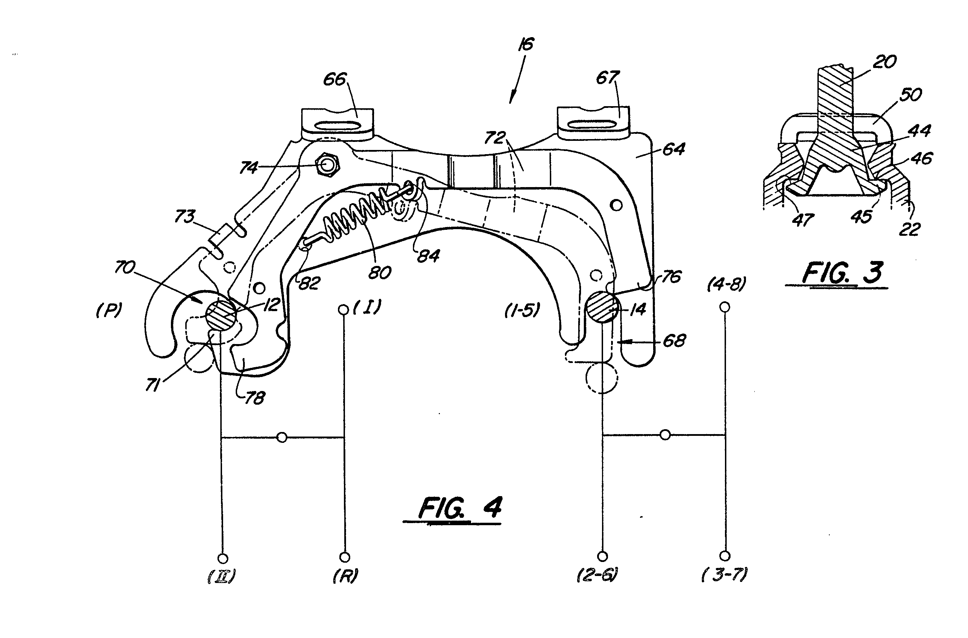

Gemäß Figur 1 weist ein nicht näher dargestelltes Fahrzeug ein Getriebegehäuse 10 mit einem üblichen Schaltgetriebe auf, das über zwei Schalthebel 12, 14 betätigt wird. Bei dem Hebel 12 handelt es sich um einen Gangschalthebel, der zwischen mehreren Schaltstellungen verstellbar ist, die eine Parkstellung (P), eine Rückwärtsstellung (R) sowie eine erste und eine zweite Vorwärtsstellung (I, II) umfassen. Das entsprechende Schaltschema läßt sich der linken Darstellung in Figur 4 entnehmen. Bei dem zweiten Hebel handelt es sich um einen Geschwindigkeitsschalthebel 14, der zwischen mehreren Geschwindigkeitsstufen verstellbar ist, die eine Langsamfahrstufe (1-5), sowie drei weitere Fahrstufen (2-6, 3-7, 4-8) umfassen. Dieses Schaltschema ist im rechten Teil der Figur 4 eingezeichnet. Neben den beiden Schalthebeln 12, 14 ist eine Blockiereinrichtung 16 angeordnet, mit deren Hilfe der Gangschalthebel 12 in seiner Parkstellung arretierbar ist, wenn sich der Geschwindigkeitsschalthebel 14 in seiner Langsamfahrstufe (1-5) befindet.

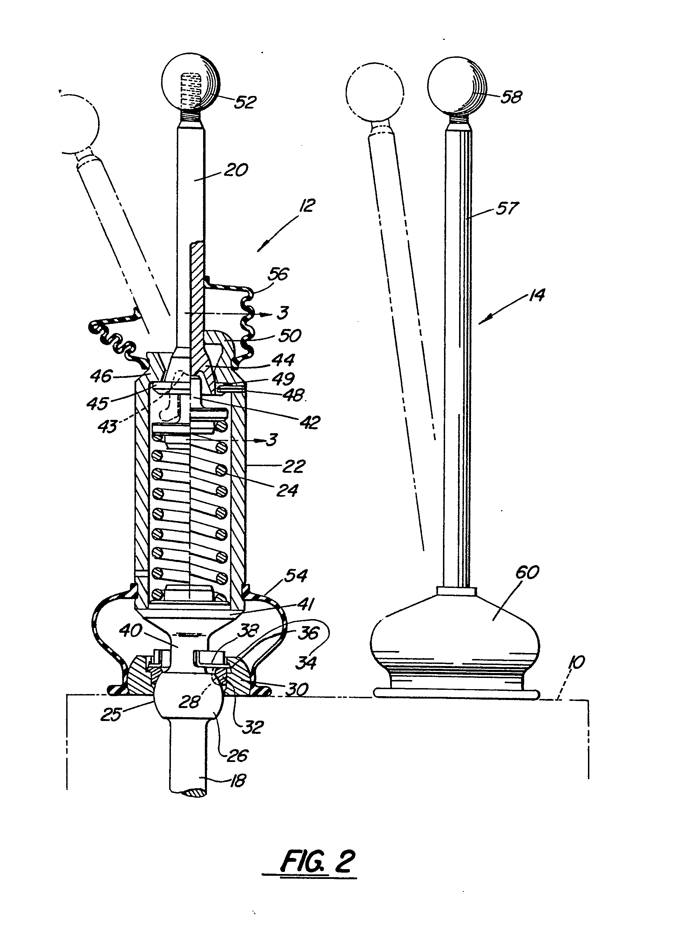

Gemäß Figur 2 besteht der Gangschalthebel 12 aus einem unteren Teil 18 und einem oberen Teil 20, die über eine Federspeicherdose 22 miteinander verbunden sind, die eine Schraubenfeder 24 umschließt. Der untere Hebelteil 18 ragt durch eine Öffnung 25 des Getriebegehäuses 10 hindurch und beaufschlagt über nicht dargestellte Schaltstangen u. dergl. verschiedene Zahnräder. Oberhalb des Getriebegehäuses 10 geht der untere Hebelteil 18 in einen Ringbund 26 über, der ein oder mehrere Schlitze 28 aufweist, in die ein Oberteil 32 eines Lagers 30 eingreift, um eine Verdrehung des unteren Hebelteils 18 innerhalb der Öffnung 25 zu verhindern.

Das vorzugsweise aus Metall bestehende Lager 30 wird gegenüber dem Ringbund 26 durch eine Oberfläche 34 festgehalten, die einen Schlitz 36 aufweist, in den ein Federring 38 eingreift, der ein Halsteil 40 des unteren Hebelteils 18 umschließt und eine Axialverschiebung des unteren Hebelteils 18 gegenüber dem Getriebegehäuse 10 verhindert.

Oberhalb des Halsteils 40 ist eine Oberseite 41 mit der Federspeicherdose 22 verbunden. Letztere ermöglicht dem oberen Hebelteil 20 eine Winkelbewegung gegenüber dem unteren Hebelteil 18. Diese, in Figur 2 strichpunktiert dargestellte Winkelstellung wird ermöglicht durch einen Federsitz 42, der das obere Ende der Schraubenfeder 24 beaufschlagt und mit seiner eigenen Oberfläche an einer balligen Fläche 43 zentrisch von einem zweiten Sitz 44 anliegt, der das untere Ende des oberen Hebelteils 20 bildet. Wird letzterer in die strichpunktierte Stellung verschwenkt, rollt sein zweiter Sitz 44 auf dem Federsitz 42 ab. Aufgrund der gewählten Anordnung wird die die Feder beaufschlagende Kraft immer genau mittig zur Achse der Schraubenfeder 24 gehalten.

Figur 3 läßt erkennen, daß der zweite Sitz 44 eine Lippe 45 aufweist, die gegen eine Schulter 46 der Federspeicherdose 22 anliegt, wodurch die Bewegung des zweiten Sitzes 44 nach oben innerhalb der Federspeicherdose 22 begrenzt wird. Durch einen in einen Vertikalschlitz 49 der Federspeicherdose 22 eingreifenden Querstift 48 wird eine Verdrehung des zweiten Sitzes 44 innerhalb der Federspeicherdose verhindert. Jedoch verhindert dieser Querstift 48 nicht eine Verschwenkbewegung des zweiten Sitzes 44.

Angenähert 90° nach rechts zu der Längsbewegung des Gangschalthebels 12 ist in einem Teil der Lippe 45 eine Winkelfläche 47 vorgesehen. Letztere verringert die erforderlichen Seitenkräfte, um das obere Hebelteil 20 des Gangschalthebels 12 in der Blockiereinrichtung 16 zu arretieren. Eine genauere Beschreibung dieses Arretiervorganges erfolgt später.

Auf dem oberen Ende der Federspeicherdose 22 ist, wie Figur 2 zeigt, ein Anschlag 50 vorgesehen, der an dem oberen Hebelteil 20 des Gangschalthebels 12 anliegt und den Fahrer unterstützt, wenn der Gangschalthebel 12 zurück in seine neutrale Stellung verschwenkt wird. Der Anschlag 50 verhindert außerdem ein Überschalten von der Parkstellung sofort in die zweite Vorwärtsstellung ; ferner hindert der Anschlag 50 das obere Hebelteil 20 gegenüber dem unteren Hebelteil 18 in alle Richtungen in eine Winkelstellung verschwenkt zu werden. Der Anschlag 50 begrenzt die Bewegung des oberen Hebelteils 20 vorzugsweise auf 180°, um das untere Hebelteil 18 in einer Stellung zu halten. Die Kraft zum Zusammendrücken der Schraubenfeder 24 ist größer als die zum Schalten des Getriebes erforderlichen Kräfte. So kann z. B. eine Kraft von nur etwa 22 bis 31 Newton zur Schaltung des Getriebes ausreichen, während zum Auslenken des oberen Hebelteils 20 gegenüber dem unteren Hebelteil 18 eine Kraft von etwa 111 Newton erforderlich ist.

Der obere Hebelteil 20 des Gangschalthebels 12 ist mit einem üblichen Schaltknopf 52 bestückt. Untere und obere Staubmanschetten 54, 56 schützen das untere Lager 30 sowie den oberen Bereich von der Federspeicherdose 22.

Der ebenfalls in das Getriebegehäuse 10 hineinragende Geschwindigkeitsschalthebel 14 ragt angenähert parallel zum Gangschalthebel 12 nach oben und besteht aus einem einteiligen Schaft 57, dessen oberes Ende mit einem Schaltknopf 58 bestückt ist ; außerdem ist eine Staubmanschette 60 vorgesehen.

Gemäß Figur 4 besteht die Blockiereinrichtung 16 aus einem Bügel 64, der flach ausgebildet ist und über Halter 66, 67 mit dem Rahmen des Fahrzeuges verbunden wird. Das eine Ende 68 des Bügels 64 ist gabelförmig ausgebildet und nimmt den Geschwindigkeitsschalthebel 14 auf, wenn dieser in die Langsamfahrstufe (1-5) verschoben wird. Das andere Ende 70 des Bügels 64 ist zangenförmig ausgebildet, weist eine hakenförmige Nase 71 auf und nimmt den Gangschalthebel 12 auf, wenn dieser in die Parkstellung (P) verschwenkt wird.

Auf dem Bügel 64 ist ein Sperrhebel 72 verschwenkbar gelagert, für den am Bügel 64 im Bereich seines zangenförmigen Endes 70 ein Anschlag 73 vorgesehen ist. Die Lagerung des Sperrhebels erfolgt über einen Zapfen 74. Der Sperrhebel 72 ist zwischen zwei Stellungen verschwenkbar: In seiner ersten, in Figur 4 strichpunktiert dargestellten Position liegt der Sperrhebel 72 an dem Anschlag 73 an, wobei dann das erste Ende 76 des Sperrhebels das gabelförmige Ende 78 des Bügels und das zweite Hebelende 78 das zangenförmige Ende 70 des Bügels überlappen. In die zweite, in Figur 4 in ausgezogenen Linien dargestellte Stellung wird der Sperrhebel 72 verschwenkt, wenn der Geschwindigkeitsschalthebel 14 in seine Langsamfahrstufe (1-5) verschoben wird; in dieser zweiten Hebelstellung überlappen die Hebelenden 76, 78 nicht mehr die beiden Bügelenden 68, 70. Eine in Löcher 82, 84 zwischen Bügel 64 und Sperrhebel 72 eingehängte Feder 80 zieht den Sperrhebel in seine erste Stellung gegen den genannten Anschlag 73.

Die Parkblockiereinrichtung arbeitet wie folgt: Befindet sich das Getriebe in Neutralstellung, so verschiebt der Fahrer die beiden Schalthebel 12, 14 in ihre gewünschte Stellung, worauf sich das Fahrzeug mit der vorgegebenen Geschwindigkeit in Bewegung setzt. Soll das Fahrzeug angehalten und geparkt werden, verschiebt der Fahrer zuerst den Geschwindigkeitsschalthebel 14 in seine niedrigste Langsamfahrstufe; hierbei gelangt der Geschwindigkeitsschalthebel 14 in das gabelförmige Ende 68 des Bügels 64, schlägt gegen das erste Hebelende 76 an und verschwenkt dadurch den Sperrhebel 72 entgegen dem Uhrzeigersinn um den Zapfen 74 und gegen die Wirkung der Feder 80. Dadurch gibt das zweite Hebelende 78 das zangenförmige Ende 70 des Bügels 64 frei, so daß der Fahrer den Gangschalthebel 12 in seine Parkstellung verschwenken kann. Hierzu muß der Fahrer den oberen Hebelteil 20 des Gangschalthebels 12 mit Kraft nach links — bezogen auf die Figuren 2 und 4 — auslenken, um ihn dann um die hakenförmige Nase 71 herum in das zangenförmige Ende 70 des Bügels 64 einzuführen. Ist dies geschehen, besteht für den Fahrer absolute Sicherheit dafür, daß sich das Fahrzeug nicht mehr in Bewegung setzen kann. Dies ergibt sich daraus, daß der Gangschalthebel 12 durch die Federspeicherdose 22 unter Federspannung steht, so daß selbst dann, wenn die in Frage kommenden Zahnräder des Getriebes noch nicht in Eingriff miteinander stehen, dieser Eingriff unter Wirkung der genannten Federspannung schon bei der geringsten Bewegung oder Vibration des Fahrzeuges erfolgen wird. Die Zahnräder stehen also ständig im Eingriff miteinander, oder gelangen sehr schnell in kämmenden Eingriff, wenn der Gangschalthebel 12 in Parkstellung verschwenkt wird. Der Gangschalthebel 12 kann auch nicht aus seiner Parkstellung herausspringen, da er in seiner Parkstellung sowohl durch die Formgebung des zangenförmigen Bügelendes 70 als auch der hakenförmigen Nase 71 sowie durch die Kraft gehalten wird, die zur seitlichen Verschwenkung des Gangschalthebels 12 erforderlich wäre, bevor dieser aus dem zangenförmigen Bügelende 70 herausbewegt werden kann.

Will der Fahrer wieder losfahren, verschwenkt der Fahrer mit Kraft den Gangschalthebel 12 aus seiner Parkstellung zuerst nach links und dann nach rückwärts bezogen auf die Darstellung in Figur 4. Der Gangschalthebel 12 kann dann entweder in die erste oder zweite Vorwärtsfahrstufe, in Neutralstellung oder in die Rückwärtsfahrstufe verschoben werden. Der Fahrer muß zu dieser Zeit den Geschwindigkeitsschalthebel 14 nicht verschieben, es sei denn, er wünscht eine höhere Fahrgeschwindigkeit. Wird aber der Geschwindigkeitsschalthebel 14 aus seiner niedrigsten Langsamfahrstufe zurückgeschoben, verschwenkt der Sperrhebel 72 unter Wirkung seiner Feder 80 in seine erste Stellung, in der der Sperrhebel 72 ein Einführen des Gangschalthebels 12 in das zangenförmige Bügelende 70 so lange verhindert, wie nicht der Geschwindigkeitsschalthebel 14 in seine niedrigste Langsamfahrstufe geschoben worden ist. Hierin liegt für den Fahrer die optische Erkennbarkeit der sicheren Parkstellung des Fahrzeuges, wenn der Gangschalthebel in Parkstellung verschwenkt ist.

## Ansprüche

1. Parkblockiereinrichtung für ein Getriebe, insbesondere ein Fahrzeuggetriebe, das über einen Gang- und einen Geschwindigkeitsschalthebel betätigt wird, wobei der Gangschalthebel (12) zwischen mehreren, u. a. eine Parkstellung (P) umfassenden Schaltstellungen (R, I, II) und der Geschwindigkeitsschalthebel (14) zwischen mehreren, u. a. eine Langsamfahrstufe (1-5) umfassenden Geschwindigkeitsstufen (2-6, 3-7, 4-8) verstellbar sind, gekennzeichnet durch folgende Merkmale:

a) eine Blockierhalterung (22, 24; 70, 71) arretiert den Gangschalthebel (12) ausrückbar in der genannten Parkstellung (P);

b) eine Sperre (72, 76, 78) ist relativ gegenüber dem Getriebe zwischen einer ersten und zweiten Stellung verstellbar, wobei die Sperre in ihrer ersten Stellung die Verschiebung des Gangschalthebels (12) in seine Parkstellung (P) verhindert, in ihrer zweiten Stellung aber zuläßt;

c) der Geschwindigkeitsschalthebel (14) verstellt bei seiner Verschiebung in die genannte Langsamfahrstufe (1-5) die Sperre (72, 76, 78) in ihre genannte zweite Stellung;

d) die Sperre (72, 76, 78) wird von einer Feder (80) o. dergl. in ihre erste Stellung gedrückt bzw. gezogen.

2. Parkblockiereinrichtung nach Anspruch 1, dadurch gekennzeichnet, daß die Blockierhalterung (22, 24; 70, 71) ein gestellfestes hakenförmiges Teil (71), das quer in den normalen Schaltweg des Gangschalthebels (12) ragt, sowie ein Gelenk (22, 24) aufweist, durch das ein Teil (20) des Gangschalthebels (12) aus dem normalen Schaltweg herausgedrückt und um das hakenförmige Teil (71) herum in dieses hineingeführt werden kann.

3. Parkblockiereinrichtung nach Anspruch 2, dadurch gekennzeichnet, daß das genannte Gelenk (22, 24) eine Federspeicherdose (22) aufweist, die zwischen einem oberen Teil (20) und einem unteren Teil (18) des Gangschalthebels (12) eingebaut ist.

4. Parkblockiereinrichtung nach Anspruch 3, dadurch gekennzeichnet, daß die Federspeicherdose (22) eine Schraubenfeder (24) umschließt, die das obere Teil (20) des Gangschalthebels (12) in eine bestimmte Stellung zum unteren Hebelteil (18) drückt und es in dieser Stellung normalerweise hält.

5. Parkblockiereinrichtung nach Anspruch 2, 3 oder 4, dadurch gekennzeichnet, daß der obere Teil (20) des Gangschalthebels (12) unabhängig von einer Bewegung seines unteren Teils (18) in abgewinkelter Stellung verschwenkbar ist.

6. Parkblockiereinrichtung nach einem der Ansprüche 2 bis 5, dadurch gekennzeichnet, daß das Gelenk (22, 24) eine Auslenkung des oberen Teils (20) des Gangschalthebels (12) auch dann zuläßt, wenn zusammengehörende Zahnräder des Getriebes nicht voll im Eingriff miteinander stehen.

7. Parkblockiereinrichtung nach einem der vorhergehenden Ansprüche, dadurch gekennzeichnet, daß die Sperre (72, 76, 78) aus einem zweiarmigen Sperrhebel (72) besteht, dessen erstes Ende (76) von dem Geschwindigkeitsschalthebel (14) zur Verschwenkung des Sperrhebels (72) in seine zweite Stellung beaufschlagt wird.

8. Parkblockiereinrichtung nach Anspruch 7, dadurch gekennzeichnet, daß der Sperrhebel (72) auf einem gestellfesten Bügel (64) verschwenkbar gelagert ist, dessen eines Ende (68) gabelförmig ausgebildet ist und den Geschwindigkeitsschalthebel (14) in seiner Langsamfahrstufe (1-5) aufnimmt, während sein anderes Ende (70) Zangenform hat und den Gangschalthebel (12) in seiner Parkstellung (P) aufnimmt, wobei das genannte erste Ende (76) des Sperrhebels (72) das gabelförmige Ende (68) und das zweite Hebelende (78) das zangenförmige Ende (70) des Bügels (64) überlappen.

9. Parkblockiereinrichtung nach Anspruch 8, dadurch gekennzeichnet, daß der genannte Bügel (64) von einer Abdeckplatte (62) abgedeckt ist.

10. Parkblockiereinrichtung für ein Mehrganggetriebe mit mehreren Zahnrädern, die von einem Handschalthebel (12) beaufschlagt werden, der zwischen mehreren, u. a. eine Parkstellung (P) umfassenden Schaltstellungen (R, I, II) verstellbar ist, wobei in Parkstellung Zahnräder in Eingriff miteinander gebracht werden, gekennzeichnet durch folgende Merkmale :

a) Ein Federgelenk (22, 24) verbindet ein oberes Teil (20) des Handschalthebels (12) mit einem unteren Teil (18) derart, daß das obere Teil (20) in eine bestimmte Stellung zum unteren Hebelteil (18) gedrückt und in dieser Stellung normalerweise gehalten wird, daß aber das obere Teil (20) aus dieser bestimmten Stellung relativ gegenüber dem unteren Hebelteil (18) herausgedrückt werden kann ;

b) eine Blockierhalterung (70, 71) arretiert den oberen Teil (20) des Handschalthebels (12) ausrückbar in der genannten Parkstellung (P) und zwar auch dann, wenn die Zahnräder, die in dieser Parkstellung miteinander in Eingriff stehen sollen, noch nicht miteinander kämmen.

**Claims**

1. A park-lock mechanism for a transmission, espacially for a vehicle transmission, being operated by a range selector shift lever and a speed shift lever, said range selector shift lever (12) being movable between a plurality of range positions (R, I, II) including, inter alia, a park position (P), and said speed shift lever (14) being movable between a plurality of speed positions (2-6, 3-7, 4-8) including, inter alia, a low speed position (1-5), characterized by the following features :

a) retaining means (22, 24 ; 70, 71) releasably retaining said range selector shift lever (12) in said park position (P) ;

b) locking means (72, 76, 78) movable relative to said transmission between a first and a second position, said locking means in its first position preventing movement of said range selector shift lever (12) in its park position (P), in its second position, however, permitting said movement ;

c) said speed shift lever (14) moving said locking means (72, 76, 78) in said second position, when said speed shift lever is moved to said low speed position (1-5) ;

d) said locking means (72, 76, 78) being biased or pulled, respectively, by a spring (80) or the like to its first position.

2. The park-lock mechanism according to claim 1, characterized in that said retaining means (22, 24 ; 70, 71) includes a fixed hook member (71) extending across the normal path of movement of said range selector shift lever (12), as well as a joint (22, 24) for permitting a portion (20) of said range selector shift lever (12) to be forceably moved out of said normal path of movement and led around and into said hook member (71).

3. The park-look mechanism according to claim 2, characterized in that said joint (22, 24) includes a spring-loaded capsule (22) positioned between an upper portion (20) and a lower portion (18) of said range selector shift lever (12).

4. The park-lock mechanism according to claim 3, characterized in that said spring-loaded capsule (22) contains a coil spring (24) for biasing said upper portion (20) of said range selector shift lever (12) to a fixed position relative to said lower lever portion (18) and normally holding it in this position.

5. The park-lock mechanism according to claim 2, 3 or 4, characterized in that said upper portion (20) of said range selector shift lever (12) can be angularly tilted irrespective of moving said lower portion (18).

6. The park-lock mechanism according to one of claims 2 to 5, characterized in that said joint (22, 24) enables said upper portion (20) of said range selector shift lever (12) to be tilted even when mating gears of said transmission are not fully meshing.

7. The park-lock mechanism according to one of the preceding claims, characterized in that said locking means (72, 76, 78) comprises a two-armed locking lever (72), the first end (76) of this lever engageable by said speed shift lever (14) for moving said lever (72) to its second position.

8. The park-lock mechanism according to claim 7, characterized in that said locking lever (72) is pivotably mounted to a fixed bracket (64) having a bifurcated end (68) and receiving said speed shift lever (14) in its low speed position (1-5), while its other end (70) having the shape of tongs and receiving said range selector shift lever (12) in its park position (P), whereby said first end (76) of said locking lever (72) overlapping said bifurcated end (68) and said second lever end (78) overlapping said tong-shaped end (70) of said bracket (64).

9. The park-lock mechanism according to claim 8, characterized in that said bracket (64) is covered by a cover plate (62).

10. Park-lock mechanism for a multi-speed transmission having a plurality of gears actuated by a manual control lever (12) movable between a plurality of positions (R, I, II) including, inter alia, a park position (P) in which gears are intermeshed, characterized by the following features :

a) a spring joint (22, 24) joining an upper portion (20) of said manual control lever (12) to a lower portion (18) such that said upper portion (20) is biased to and normally held in a fixed relative position with respect to said lower lever portion (18), that said upper portion (20), however, can be forceably moved from said fixed position relative to said lower lever portion (18) ;

b) retaining means (70, 71) releasably retaining said upper portion (20) of said manual control lever (12) in said park position (P), even if the gears to be engaged in said park position do not yet intermesh.

**Revendications**

1. Dispositif de blocage de stationnement pour boîte de vitesses, en particulier pour boîte de vitesses de véhicule, actionnée par un levier de commande de rapport et un levier de commande de vitesse, le levier de commande de rapport (12) étant déplaçable entre plusieurs positions de commande (R, I, II) comprenant entre autres une position de stationnement (P), et le levier de commande de vitesses (14) étant déplaçable entre plusieurs gammes de vitesses (2-6, 3-7, 4-8) comprenant entre autres une gamme de vitesses lentes (1-5), caractérisé par les particularités suivantes :

a) un moyen d'arrêt en position de blocage (22, 24 ; 70, 71) immobilise le levier de commande de rapport (12) d'une manière permettant son dégagement dans la position de stationnement précitée (P) ;

b) un verrouillage (72, 76, 78) est déplaçable par rapport à la boîte de vitesses entre une première et une seconde positions, ce verrouillage empêchant, dans sa première position, le déplacement du levier de commande de rapport (12) jusque dans sa position de stationnement (P), mais permettant ce déplacement dans sa seconde position ;

c) le levier de commande de vitesses (14) déplace le verrouillage (72, 76, 78) jusque dans sa seconde position précitée lorsqu'il est lui-même amené dans la position correspondant à la gamme de vitesses lentes précitée (1-5) ;

d) le verrouillage (72, 76, 78) est repoussé ou rappelé dans sa première position par un ressort (80) ou un organe analogue.

2. Dispositif de blocage de stationnement suivant la revendication 1, caractérisé en ce que le moyen d'arrêt en position de blocage (22, 24 ; 70, 71) comprend une pièce en forme de crochet (71) solidaire du châssis, qui fait saillie transversalement dans la trajectoire normale du levier de commande de rapport (12), ainsi qu'une articulation (22, 24) par laquelle une partie (20) du levier de commande de rapport (12) peut être repoussée à l'écart de la trajectoire de commande normale pour contourner la pièce en forme de crochet (71) et être engagée dans celle-ci.

3. Dispositif de blocage de stationnement suivant la revendication 2, caractérisé en ce que l'articulation précitée (22, 24) comprend un boîtier formant accumulateur à ressort (22) qui est monté entre une partie supérieure (20) et une partie inférieure (18) du levier de commande de rapport (12).

4. Dispositif de blocage de stationnement suivant la revendication 3, caractérisé en ce que le boîtier formant accumulateur à ressort (22) entoure un ressort hélicoïdal (24) qui repousse la partie supérieure (20) du levier de commande de rapport (12) dans une position déterminée relativement à la partie inférieure (18) de ce levier et qui la maintient normalement dans cette position.

5. Dispositif de blocage de stationnement suivant la revendication 2, 3 ou 4, caractérisé en ce que la partie supérieure (20) du levier de commande de rapport (12) peut pivoter indépendamment d'un déplacement de sa partie inférieure (18) jusque dans une position coudée.

6. Dispositif de blocage de stationnement suivant l'une quelconque des revendications 2 à 5, caractérisé en ce que l'articulation (22, 24) permet un débattement de la partie supérieure (20) du levier de commande de rapport (12) également lorsque des pignons conjugués de la boîte de vitesses ne sont pas complètement en prise l'un avec l'autre.

7. Dispositif de blocage de stationnement suivant l'une quelconque des revendications précédentes, caractérisé en ce que le verrouillage (72, 76, 78) est constitué par un levier de verrouillage à deux bras (72) dont une première extrémité (76) est soumise à l'action du levier de commande de vitesses (14) pour faire pivoter le levier de verrouillage (72) jusque dans sa seconde position.

8. Dispositif de blocage de stationnement suivant la revendication 7, caractérisé en ce que le levier de verrouillage (72) est monté à pivotement sur un étrier (64) solidaire du châssis, dont une extrémité (68) a une forme de fourchette et reçoit le levier de commande de vitesses (14) dans sa position correspondant à la gamme de vitesses lentes (1-5), tandis que son autre extrémité (70) a une forme de pince et reçoit le levier de commande (12) dans sa position de stationnement (P), la première extrémité précitée (76) du levier de verrouillage (72) chevauchant l'extrémité en forme de fourchette (68) et la seconde extrémité (78) de ce levier chevauchant l'extrémité en forme de pince (70) de l'étrier (64).

9. Dispositif de blocage de stationnement suivant la revendication 8, caractérisé en ce que l'étrier précité (64) est recouvert par une plaque de recouvrement (62).

10. Dispositif de blocage de stationnement pour boîte de vitesses à plusieurs rapports comprenant plusieurs pignons qui sont soumis à l'action d'un levier de commande manuelle (12) déplaçable entre plusieurs positions de commande (R, I, II) comprenant entre autres une position de stationnement (P), des pignons étant amenés en prise l'un avec l'autre dans cette position de stationnement, caractérisé par les particularités suivantes :

a) une articulation à ressort (22, 24) relie une partie supérieure (20) du levier de commande manuelle (12) avec une partie inférieure (18) de façon telle que la partie supérieure (20) soit repoussée dans une position déterminée par rapport à la partie inférieure (18) et soit maintenue normalement dans cette position, cette partie supérieure (20) pouvant toutefois être repoussée à l'écart de cette position déterminée relativement à la partie inférieure (18) du levier ;

b) un moyen d'arrêt en position de blocage (70, 71) immobilise la partie supérieure (20) du levier de commande manuelle (12) d'une manière permettant son dégagement dans la position de stationnement précitée (P) également lorsque les pignons qui doivent être en prise l'un avec l'autre dans cette position de stationnement n'engrènent pas encore l'un avec l'autre.

0 050 785

FIG. 1

FIG. 2

FIG. 3

FIG. 4